# EUROPEAN PATENT APPLICATION

(11) **EP 4 707 847 A1**
(43) Date of publication of application: **11.03.2026**
(21) Application number: 25201151.5
(22) Date of filing: 09.09.2025
(51) Int. Cl.: G01S 5/28, G01S 11/14, G01S 3/802

(54) **LOCALIZATION OF LAUNCH SITES OF AIRBORNE OBJECTS USING A SINGLE ACOUSTIC ARRAY**

(30) Priority: 09.09.2024 IL 31553924
(71) Applicant: Elta Systems Ltd., 7710201 Ashdod (IL)
(72) Inventor: FRENKEL, Noam, 9979700 KARMEY YOSEF (IL); SHARON, Erez, 9979700 KARMEY YOSEF (IL); ETTINGER, Gonen Moshe, EFRAT (IL); WARHAFTIG, Ram, 7681200 YAD BIYAMIN (IL)
(74) Representative: Regimbeau

(57) **Abstract**

The disclosed subject matter includes a system and method for acoustic-based localization of airborne object launch sites using a single acoustic array. The technique leverages object-specific acoustic signatures generated during launch, flight, and impact phases to extract signal parameters for range and direction estimation. By processing these parameters, the system identifies acoustic events and associates signals with a corresponding object type. For detected events, the system calculates a range between the acoustic array and the launch site based on an acoustic profile of the identified object type, determines a direction from the array to the launch site, and derives the launch site location from one or more calculated ranges and directions. This enables cost-effective, portable, and reliable localization of launch sites, providing actionable intelligence and enhancing defense capabilities in diverse operational settings.

## Description

### TECHNICAL FIELD

The presently disclosed subject matter relates to the localization of a sound source using acoustic signals.

### BACKGROUND

Acoustic localization of an object involves capturing its sound emissions with acoustic sensors (e.g., microphones) to determine its position. The direction to the object can be estimated using an acoustic array by analyzing the differences in arrival times or in phases of the sound waves at the different microphones within the array. Techniques such as Time Difference of Arrival (TDOA), Direction of Arrival (DOA) estimation, and acoustic beamforming are commonly used for this purpose. These methods leverage the spatial arrangement of acoustic sensors to infer the angle of arrival of the sound, providing direction estimates.

To calculate the range to the object, at least two spatially separated acoustic arrays are necessary, utilizing techniques such as TDOA, TOA, and DTOA. By comparing the direction estimates from each array, acoustic triangulation techniques can be applied to estimate the object's 3D location. This method is essential for full acoustic localization, as a single array alone can generally only provide direction information, not accurate distance.

### GENERAL DESCRIPTION

The presently disclosed subject matter relates to a novel technique for acoustic-based range determination and localization of a launch site of an airborne object using a single acoustic array. This approach leverages the unique acoustic signatures associated with different types of airborne objects, which vary distinctly during their launch, flight, and impact phases. Each phase provides unique auditory cues that can be analyzed and identified to aid in the localization of the airborne object and its launch site.

Airborne objects (or "airborne vehicles") include, for example various types of munitions such as guided missiles, rockets, artillery shells, and mortars, each designed for specific operational purposes. Considering, for instance, anti-tank guided missiles (ATGMs) such as Kornet, TOW, and Javelin missiles, each exhibit a unique acoustic signature during their launch, flight, and impact phases. These signatures include acoustic signal parameter values that are distinct to each missile type.

Localizing a launch site of airborne objects, particularly for munitions, provides valuable intelligence on enemy positions and capabilities, and enhances the effectiveness of defense systems by facilitating rapid counterattacks to neutralize threats, and enabling precise targeting and interception of subsequent attacks. This capability is essential for maintaining a strategic advantage and ensuring the safety of personnel and assets. Employing a single acoustic array for localization is both cost-effective and operationally efficient, compared to using multiple arrays. It simplifies setup and calibration, requires less infrastructure, is more portable, and reduces the risk to personnel during deployment, thus making it suitable for use in a variety of environments.

The disclosed technique can operate in noisy environments, enabling acoustic-based localization even in conditions that would typically confuse and hinder other systems. By incorporating mechanisms to resolve potential ambiguities, the system ensures accurate and reliable association of signals with their corresponding events, even in complex scenarios with multiple objects or overlapping signals, thereby enhancing its effectiveness in diverse and challenging operational settings.

According to a first aspect of the presently disclosed subject matter, there is provided a system comprising a system for localizing a launch site of an airborne object, the system comprising a single acoustic array of one or more acoustic sensors (e.g., microphones) operatively connected to a processing circuitry;
the acoustic array is configured to receive acoustic signals;
the processing circuitry is configured to process the acoustic signals comprising:
   determine, based on signal parameters of the acoustic signals, one or more acoustic events, including at least one of: launch event of an airborne object occurring at a launch site and flight event of the airborne object; and identify an object type of the airborne object;
   for each acoustic event that is detected:
      calculate a respective range between the acoustic array and the launch site, based on an object-specific acoustic profile of the corresponding type of airborne object; calculate a respective direction from the acoustic array and the launch site;
      calculate a location of the launch site based on one or more respective ranges and a direction to the launch site calculated by the acoustic array.

In addition to the above features, the method according to this aspect of the presently disclosed subject matter can optionally comprise one or more of features (i) to (xii) below, in any technically possible and technically possible combination or permutation:
i. wherein the one or more acoustic events that are detected includes a launch event, wherein the object-specific acoustic profile includes an acoustic decay profile that is indicative of a relationship between the intensity of the acoustic signals and a range between the acoustic sensors and a source location of the acoustic signals.
ii. wherein the one or more acoustic events that are detected include a flight event of the airborne object, wherein the object-specific acoustic profile comprises: data indicative of multiple key points distributed along a flight path of the airborne object, each key point being characterized by:
   a respective range between the key point to the launch site, a respective set of signal parameters, and a respective acoustic decay profile, which indicates a relationship between the intensity of the acoustic signals generated by the airborne object at the key point, and a range between the acoustic sensors and the location of the key point;
   wherein the processing circuitry is configured to utilize the object-specific acoustic profile for reconstructing a flight path of the airborne object to the launch site and calculating the respective range to the launch site.
iii. wherein the acoustic events include an impact event of the airborne object;
   the processing circuitry is configured to:
   calculate a range to the impact location based on the object-specific acoustic profile, wherein the object-specific acoustic profile includes an acoustic decay profile that is indicative of a relationship between the intensity of the acoustic signals and a range between the acoustic sensors and a source location of the acoustic signals;
   calculate a respective direction from the acoustic array and the impact point;
   calculate a location of the impact point based on the respective range and the respective direction.
iv. wherein the one or more acoustic events include a launch event and a flight event and wherein the processing circuitry is configured to calculate a first range for the launch event and a second range for the flight event, and to calculate the position based on a combination of the first range and second range.
v. wherein the processing circuitry is operatively connected to an acoustic profiling library and is configured to query the library using the signal parameters, and retrieve, from the acoustic profiling library, one or more of: data indicative of a type of the acoustic event; and data indicative of a type of airborne object.
vi. wherein the processing circuitry is configured for detecting one or more acoustic events, to utilize a machine learning model trained to receive the signal parameter and provide, as output, information indicative of a detected acoustic event.
vii. wherein the processing circuitry is configured for identifying based on signal parameters of the acoustic signals, a corresponding type of airborne object, to utilize a machine learning model trained to receive the signal parameter, and provide, as output, a matching type of airborne object.
viii. wherein the processing circuitry is configured for calculating a respective range between the acoustic array and the airborne object to utilize a machine learning model trained to receive the signal parameter, and provide, as output, the respective range.
ix. The system comprises or is otherwise operatively connected to a countermeasure system configured, responsive to receiving the location of the launch site, to activate a countermeasure targeting the launch site.
x. The system comprises or is otherwise operatively connected to a surveillance system, configured to utilize the location of the launch site to search and monitor the launch site.
xi. wherein the airborne object is a type of munition.
xii. wherein the airborne object is an unmanned aerial system (UAS).

According to a second aspect of the presently disclosed subject matter there is provided a computer-implemented method of localizing a launch site of an airborne object using a single acoustic array of one or more acoustic sensors; the method comprising:
receiving acoustic signals by the acoustic array;
processing the acoustic signals comprising:
   determining, based on signal parameters of the acoustic signals, one or more acoustic events, including at least one of: launch event of an airborne object occurring at a launch site and flight event of the airborne object; and identify an object type of the airborne object;
   for each acoustic event that is detected:
      calculating a respective range between the acoustic array and the launch site, based on an object-specific acoustic profile of the corresponding type of airborne object; calculating a respective direction from the acoustic array and the launch site; calculating a location of the launch site based on one or more respective ranges and a direction to the launch site calculated by the acoustic array.

According to a third aspect of the presently disclosed subject matter there is provided a non-transitory computer readable medium comprising instructions that, when executed by a computer, cause the computer to perform a method of localizing a launch site of an airborne object using a single acoustic array; the method comprising:
processing acoustic signals received by the single acoustic array:
determining, based on signal parameters of the acoustic signals, one or more acoustic events, including at least one of: launch event of an airborne object occurring at a launch site and flight event of the airborne object; and identifying an object type of the airborne object;
for each acoustic event that is detected:
   calculating a respective range between the acoustic array and the launch site, based on an object-specific acoustic profile of the corresponding type of airborne object; calculating a respective direction from the acoustic array and the launch site; calculating a location of the launch site based on one or more respective ranges and a direction to the launch site calculated by the acoustic array.

The computer-implemented method and the non-transitory program storage device disclosed above, can optionally comprise one or more of features (i) to (xii) listed above, *mutatis mutandis,* in any technically possible combination or permutation.

The presently disclosed subject matter further contemplates a countermeasure system and a surveillance system or any other system that comprises or is otherwise operatively connected to the system of the first aspect above.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
Fig. 1 is a schematic block diagram of an acoustic localization system, according to some examples of the presently disclosed subject matter;
Fig. 2 is a schematic block diagram of an acoustic localization unit, according to some examples of the presently disclosed subject matter;
Fig. 3 is a flowchart illustrating operations carried out during a launch-based acoustic localization procedure of a launch site using a single acoustic array, according to some examples of the presently disclosed subject matter;
Fig. 4 is a flowchart illustrating operations carried out during a flight-based acoustic localization procedure of a launch site using a single acoustic array, according to some examples of the presently disclosed subject matter;
Fig. 5 is a flowchart illustrating operations carried out during an impact point acoustic localization procedure using a single acoustic array, according to some examples of the presently disclosed subject matter; and
Fig. 6 is a flowchart illustrating, in high level, a process of localizing a launch site using a single acoustic array and acoustic phases data integration, according to some examples of the presently disclosed subject matter.

### DETAILED DESCRIPTION

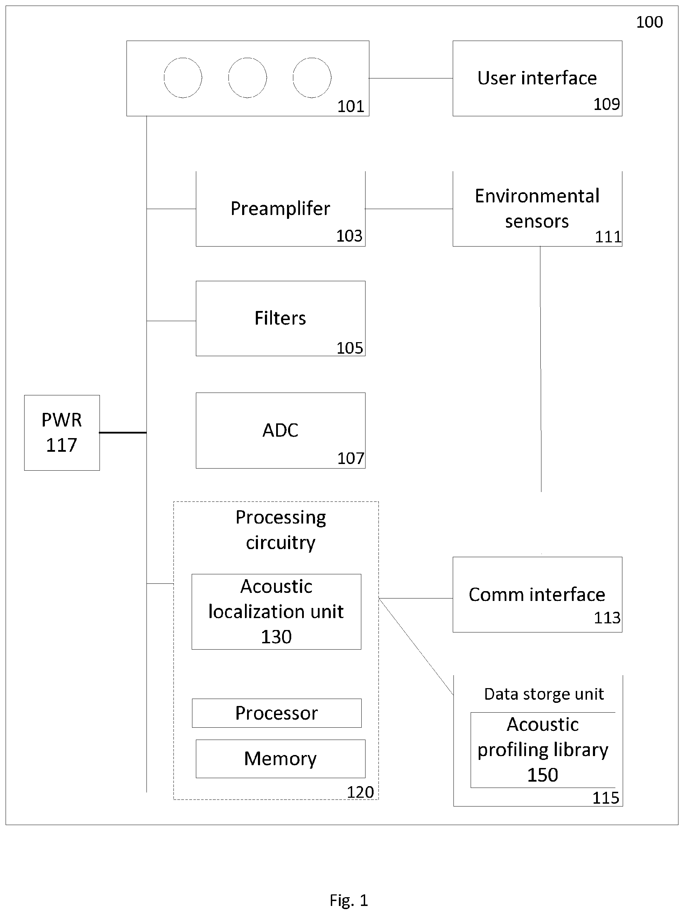

Attention is now drawn to Fig. 1 showing a high-level view of a single-array acoustic localization system (100), according to some examples of the presently disclosed subject matter. Fig. 1 is provided by way of example for illustrative purposes only, and the particular design in the figure should not be construed as being limiting in any way.

From a broad perspective, the system comprises acoustic array (101) operatively connected to a processing circuitry 120. The acoustic array comprises two or more acoustic sensors, such as microphones, hydrophones, piezoelectric sensors, micro-electromechanical systems (MEMS) sensors, fiber optic sensors, or any other suitable transducers capable of converting acoustic waves and/or vibrations into electrical signals. While multiple sensors can improve performance, it is noted that, in some examples, the acoustic array may include a signal acoustic sensor. Acoustic signals are captured by the acoustic array (101) and forwarded to the processing circuitry (120), which is configured to process the received signals and determine a range to the signals source. More specifically, the system (100) is configured to calculate a range to a launch site of an airborne object (e.g., an airborne munition or aircraft) based on acoustic signals generated in one or more acoustic phases of the airborne object, including launch phase, flight phase, and impact phase. In some examples, system 100 is further configured to calculate a direction to a sound source, such as a launch site, and determine the location of the sound source based on integration of the calculated direction and range.

Fig. 1 shows an example where the acoustic array is connected to a preamplifier (103) configured to amplify signals received from the acoustic sensors to a level suitable for further processing. The amplified signals are then passed through filters (105), which are configured to remove undesired noise and frequencies from the signals, ensuring that the relevant acoustic data is processed. System 100 further comprises an Analog-to-Digital Converter (ADC) (107) configured to convert received signals from analog to digital form. The digital signals are then sent to the processing circuitry (120). Notably, digital acoustic sensors are characterized by a more compact structure, where functional elements such as amplification, filtering, and analog-to-digital conversion are integrated within a single package, whereas in analog sensors, these components are typically handled externally through separate circuits or devices. Fig. 1, which schematically illustrates an acoustic system, aims to capture both analog and digital devices.

As further discussed below with reference to the following figures, the processing circuitry is configured to execute various processing operations. Processing circuitry 120 comprises one or more processors operatively connected to one or more computer-memory devices. In some examples, the processing circuitry is configured to execute several functional modules in accordance with computer-readable instructions implemented on a non-transitory computer-readable memory comprised in the processing circuitry. Such functional modules are referred to hereinafter as comprised in the processing circuitry. Fig. 1 illustrates, by way of example, processing circuitry 120 comprising acoustic localization unit (130).

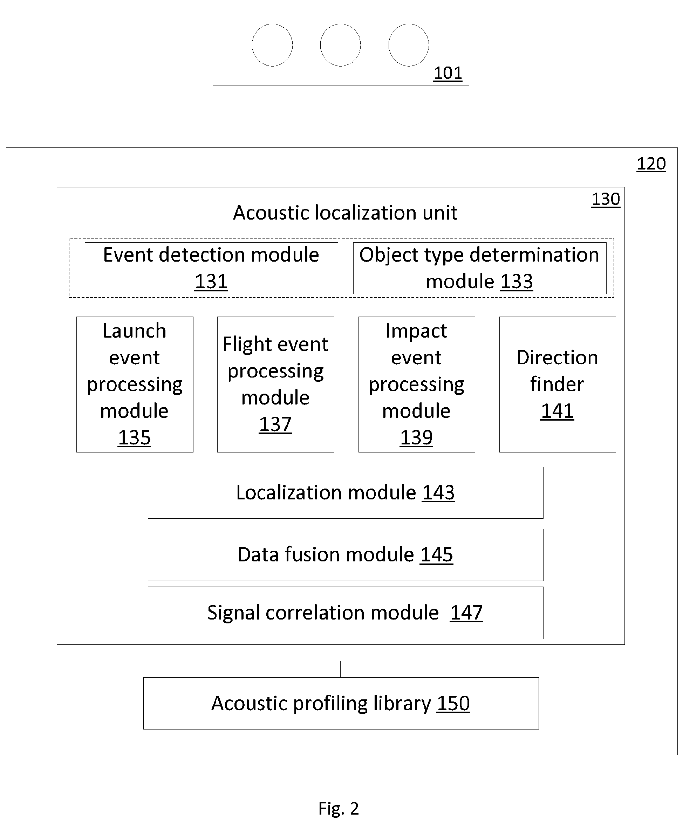

The data storage component (115) is used to store various types of data, including software and/or firmware. For example, it stores executable computer programs that are loaded into memory at runtime for execution and processing of input acoustic signals. Additionally, the data storage component (115) can store an acoustic profiling library. This database contains data that associates different types of airborne objects with their respective object-specific acoustic profiles. Each object-specific acoustic profile of each type of airborne object characterizes acoustic signals generated by the airborne object during one or more acoustic phases. A more detailed description of the acoustic profiling library is provided below with respect to Fig. 2.

Fig. 1 further shows, by way of example, that the processing circuitry is connected to a communication interface (113), which facilitates the transmission of processed data to other systems or users (e.g., for transmission of launch site location to another system). The communication interface ensures that the data can be shared in real-time, or stored for later analysis.

In some examples, the system can also include one or more environmental sensors (111) that provide additional data, such as temperature, humidity, and wind speed, which can affect the propagation of sound waves. This environmental data can be used to adjust the processing algorithms for more accurate localization results.

In some examples, system 100 comprises a user interface (109) to enable user interaction with the system. The user interface can include a display device, user interaction devices (e.g., computer mouse and keyboard), and a graphical user interface (GUI) configured to enable, inter alia, user-specified inputs related to the system (100). For instance, the user may define, through the GUI, parameters and control operations of the system. The user may also view on the display and manipulate the processing results or intermediate processing results provided by system 100, e.g., direction, range, or localization data determined by the system. System 100 is powered by a power supply (PWR) (117), which provides the necessary electrical power to the components of the system, ensuring continuous and reliable operation.

Fig. 2 is a non-limiting example of a block diagram schematically illustrating acoustic localization unit (130), according to examples of the presently disclosed subject matter. The acoustic localization unit (130) is configured to process the acoustic signals received by the acoustic array (101), and determine range, direction, and location of a launch site. According to the illustrated example, acoustic localization unit (130) comprises an event detection module (131) configured to process acoustic signals received by the acoustic array 101, and identify different acoustic events (or "phases"), such as launch, flight, and impact events; and an object type determination module (133) configured to process acoustic signals received by the acoustic array (101), and determine a type of airborne object that is the source of the sensed acoustic signals. In some examples, a single acoustic signature is used for uniformly determining both the acoustic event and the type of airborne object. In such cases, event detection module (131) and object type determination module (133) can be implemented as a single module that performs both actions together.

Acoustic localization unit (130) further comprises modules dedicated to process acoustic signals related to different acoustic events. For example, it may include a launch event processing module (135), flight event processing module (137), and impact event processing module (139). The launch event processing module is configured to process acoustic signals generated during launch of an airborne object and determine a range to a launch site. The flight event processing module is configured to process acoustic signals generated by the airborne object during flight of the airborne object and determine a range to a launch site. The impact event processing module is configured to process acoustic signals generated as a result from the impact of the airborne object (e.g., crash of the object on the ground and/or on another target and/or explosion of munition), and determine a range to the impact point.

According to some examples, range data outputs from these processing modules are fed into the localization module (143), which integrates the data to determine, based on one or more of these outputs and direction to the launch site calculated by the direction finder 141, a location of the launch site.

The sensors (e.g., microphones) in the array can be located near each other, while a greater distance between the microphones would provide more accurate results. Acoustic signals received by two or more sensors in the array can be used to calculate the direction to the sound source. Notably, there is a known correlation between the desired accuracy, the wavelength of the acoustic signals, and the distance between microphones. In general, the angular resolution is inversely proportional to the distance between sensors.

As mentioned above, and according to some examples, the acoustic localization unit (130) is operatively connected to the acoustic profiling library (120). The acoustic profiling library is designed to store object-specific acoustic profiles for various types of airborne objects. In one example of library implementation each unique object has one or more respective entries, the one or more entries being associated with or linked to object-specific profiles. Each profile corresponds to a specific acoustic event or phase, including launch, flight, or impact. Each object-specific profile includes a set of signal parameters and their corresponding values or value ranges, observed during its respective phase. The signal parameter values in the profile serve as an acoustic signature that uniquely identifies the respective object.

An example of a structure of the acoustic profiling library is described below.
- Airborne Object (AO): The primary entity, e.g., AO1 (e.g., certain type of missile), AO2 (e.g., certain type of mortar), AO3 (e.g., a certain type of UAS).
- Each type of object has three different acoustic profiles, each corresponding to a respective acoustic event, including:
   ∘ Object-specific launch profile: stores signal parameters characterizing acoustic signals generated during a launch event, including, for example, frequency, intensity (measured in dB), waveform, duration, and acoustic decay profile.
   ∘ Object-specific flight profile: stores signal parameters characterizing acoustic signals generated during flight, including, for example, frequency range, intensity, angular velocity, and continuous Doppler effect. It may further include an acoustic pattern comprising a sequence of key points distributed along the flight path of the airborne object and an acoustic decay profile of each key point.
   ∘ Object-specific impact profile: stores signal parameters characterizing acoustic signals generated during an impact event, including, for example, peak intensity and amplitude, frequencies, sudden frequency range, waveform, and acoustic decay profile.

The acoustic decay profile includes information indicative of the relationship between intensity and distance, which characterizes how the intensity of the acoustic signal varies with respect to the distance from the source (place of origin).

As described in more detail below, in some examples, during operation and responsive to receiving acoustic signals, the acoustic localization unit (130) extracts signal parameters from the received signals and queries the acoustic profiling library to identify the type of airborne object and facilitate the determination of the range to the launch site, and its location.

In some examples, in addition to or instead of the acoustic profiling library, acoustic localization unit (130) makes use of a machine learning model that is trained on a comprehensive dataset, containing, for example, object-specific acoustic profiles of various airborne objects. Each profile consists of signal parameters observed during key events like launch, flight, and impact (received by a single acoustic array 101), including those mentioned above with respect to the acoustic profiling library.

In this approach, either a single machine learning model can be utilized to address multiple functional purposes, or distinct models can be employed, each specifically tailored for a dedicated function. During training, the one or more models learn to identify correlations between signal parameter values and the type of airborne object and/or between signal parameters and a type of launch event. For instance, the model may learn that certain frequencies and waveforms are associated with a specific type of aircraft. A machine learning model can be also trained to determine a range to launch site based on signal parameters of an acoustic signal received by a signal acoustic array.

In some examples, additional environmental parameters (collected, for example, by environmental sensors 111) can be used during training and execution, to further enhance the accuracy of the model.

As known in the art, the training process can involve supervised learning, where the model is provided with labeled examples and iteratively adjusts its parameters to minimize prediction errors. Validation on a separate dataset ensures that the model generalizes well to new, unseen data.

Once trained, the model is deployed to process real-time acoustic data, enabling it to detect and classify airborne objects based on their unique acoustic profile. When a specific acoustic phase is detected, the model analyzes the incoming signal parameters, identifies the object type, and estimates its range. This capability allows for accurate tracking and localization of airborne objects in various environments.

In some examples, a machine learning model can be used for only one task, while other approaches are used for completing other tasks. For instance, a machine learning model can be used for identifying the type of airborne object, while determination of a range to a launch site utilizes calculation based on an acoustic profiling library.

In case one or more machine learning models are used, acoustic localization unit (130) may include a ML model, uploaded for example from data storage 115, dedicated for processing acoustic signals as discussed above. In some examples, system 100 may further include a ML training module, configured to perform the training of the ML learning model.

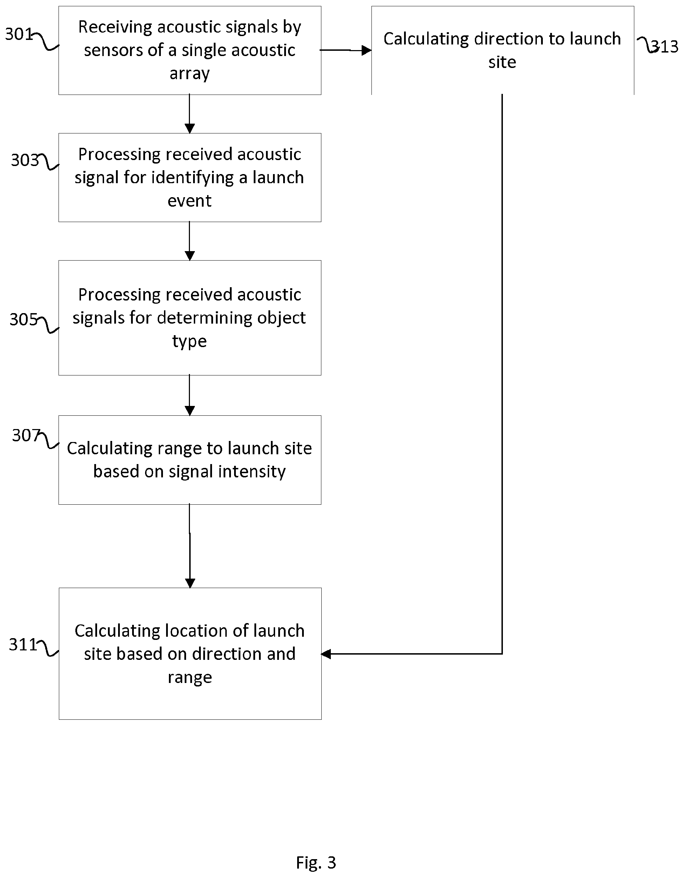

Proceeding to Fig. 3, this is a flowchart illustrating operations carried out during a launch-based acoustic localization of a launch site using a single acoustic array, according to examples of the presently disclosed subject matter. For ease of understanding and by way of non-limiting examples only, operations in Figs. 3, 4, 5, and 6 are described with reference to elements shown in Figs. 1 and 2.

The process can be initiated responsive to receiving acoustic signals by sensors in the acoustic array 101 (block 301). The single acoustic array (101) captures the sound waves generated by the launch event of an airborne object. These acoustic signals are then forwarded to the processing circuitry for further analysis. Preliminary processing may be applied on the received signals, including amplification, filtering, and digitization.

The received acoustic signals are processed to determine the relevant acoustic phase, or, in the present case, whether a launch event has occurred (block 303; e.g., by event detection module 131). This step focuses on analyzing the acoustic signals to determine whether the specific values of signal parameters, such as frequency, intensity, and waveform, match those uniquely associated with a launch event.

For example, in certain rocket propelled ammunitions such as ATGMs, acoustic signals generated during launch are characterized by two distinct peaks in intensity, time span, and frequencies. The first peak occurs at the moment the propulsion system ignites, reflecting the initial energy release as the object begins its ascent. This peak marks the start of the launch phase. The second peak often occurs shortly after, as the object reaches a point of maximum thrust, or when secondary propulsion stages are activated. These two peaks together provide a distinctive acoustic signature that can be used to identify a launch event of an ATGM. The brief but intense nature of the launch signal, with its dual peaks, makes it distinguishable from other phases of an airborne object.

In another example of mortar rounds, the acoustic signals generated during launch are characterized by a sharp, intense peak in amplitude. This peak occurs at the moment the propellant charge detonates, rapidly expelling the round from the mortar tube. The launch event is marked by this brief but powerful acoustic signature, which is distinct due to its sudden onset and high intensity. Unlike other munitions, the mortar launch produces a single, prominent acoustic spike, without subsequent peaks immediately following the launch. This characteristic spike can be used to identify the launch event of a mortar round, distinguishing it from other phases of its flight or from other types of munitions.

Notably, the difference in acoustic signatures extends to different munitions of the same type. While they may be similar in structure, they can vary significantly in parameters such as frequency, intensity, and time. These variations allow for the identification of specific types or models of munitions based on their unique acoustic profiles, even within the same general category of weaponry.

The processing circuitry (120) extracts certain signal parameters from the acoustic signals of the launch event and uses this data to identify the type of object which was launched (block 305). For example, the two main peaks often observed in the acoustic signature of a launch event of an ATGM are characterized by their distinct frequency, amplitude, and timing profiles. Applying a transformation function such as a Fast Fourier Transform (FFT) to the acoustic signal, transforms these components from the time domain to the frequency domain. In this transformed signal, prominent peaks in the frequency domain corresponding to the launch event can be observed, allowing for a clearer identification of the airborne object's type.

In some examples, where an acoustic profiling library is used, signal parameter values extracted from the acoustic signals, or their derivatives (e.g., rate of change or other derived metrics), are used to query the library and identify a matching airborne object. To facilitate efficient search and retrieval, different airborne objects stored in the library can be indexed according to their corresponding values for these parameters, enabling quick and accurate matching.

Notably, in some examples, both the type of event and object type can be determined together (e.g., in one operation), for example, in a single library query, by finding the relevant entry which matches both the type of event and the type of airborne object. In other examples, where a machine learning model is used, the signal parameters or their derivatives are fed as input to the model trained to identify a matching type of event and/or type of airborne object. This is also applicable to flight and impact events.

Once the type of airborne object is determined, a range to the launch site is calculated (block 307; e.g., by launch event processing module 135). As mentioned above, this is done using a single acoustic array and possibly even using a single sensor in the array. In some examples, where an acoustic profiling library is used, data that enables calculating the range is retrieved from the library. This can include, for example, data indicative of an acoustic decay profile.

To determine the range to a launch site using the recorded intensity of a launch event, the method leverages the respective decay profile, which provides the fundamental relationship between the intensity of the emitted signal and its distance from the source. The principle underlying this relationship is based on the fact that as a wave propagates through a medium, its intensity diminishes as a function of the distance from the point of origin. Each type of sound (generated by a specific type of object) exhibits a specific pattern of decline in intensity, and this decline can be used to estimate the range to the launch site, provided there is a precise measurement of the signal's intensity at a known location.

In one example, the method makes use of a reference intensity measurement retrieved from the object-specific acoustic profile of the relevant object using well established methods. In this approach, the range to the launch site can be calculated by comparing the recorded intensity by the acoustic array with the reference intensity from a known distance. By applying an appropriate relationship between intensity and distance, the range can be accurately estimated based on the observed reduction in intensity.

According to one example inverse square law can be applied. According to this principle, if the intensity *l₀* at a known distance *d₀* from the source is available, the range d to the launch site can be calculated by comparing the recorded intensity *I* at the measurement location with the reference intensity. This method allows accurate estimation of the distance based on the observed reduction in intensity.

The frequency can be used to fine-tune the range determination. High frequencies are characterized by greater decay through the atmosphere. Therefore, the received sound can be analyzed to determine the frequencies, and, according to the frequencies, more information on the distance can be deduced. The lower the frequency, the farther away is the object.

In some examples, a machine learning model can be used for calculating the range to the launch site. To this end the signal parameters extracted from the received acoustic signals can be provided to a trained ML model which provides, as output, a range to the launch site. For example, the ML model can be trained to receive input, including type of airborne object and acoustic signal parameters including intensity and frequency values, and provide, as output, a range to the launch site.

In some examples, the direction to the launch site is also calculated using the system 100, for instance, by employing methods such as Time Difference of Arrival (TDOA) or Direction of Arrival (DOA), using signals received at two or more sensors in the array (block 313; by direction finder 141).

The direction and range to the launch site can be integrated to calculate a location of the launch site, providing a comprehensive assessment of both the distance and bearing relative to the observation point, all by using a single acoustic array (block 311; e.g., by localization module 143).

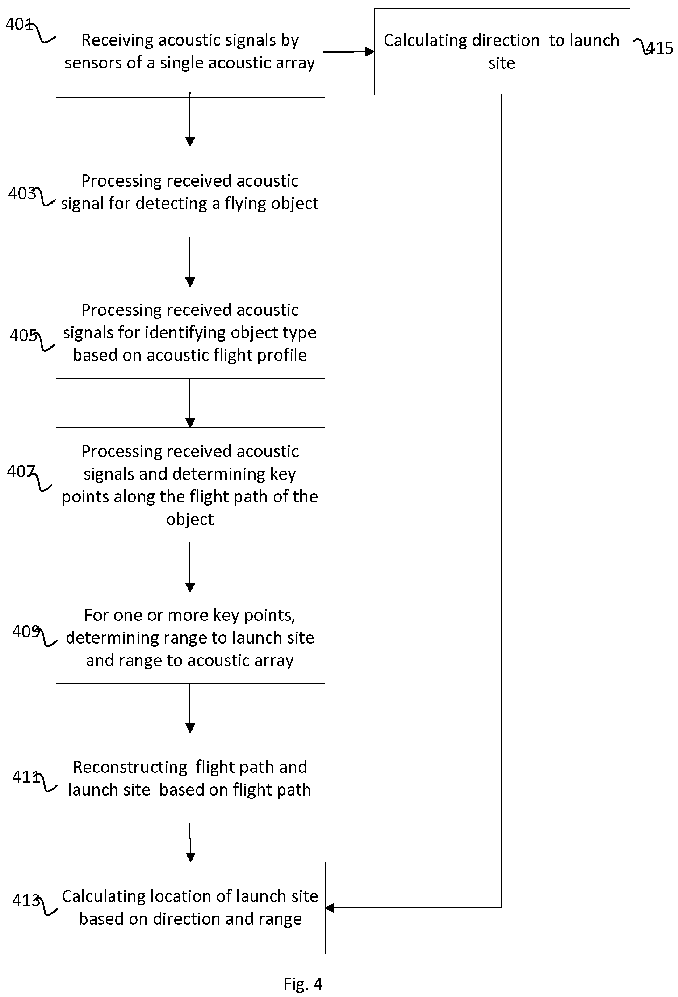

Fig. 4 is a flowchart illustrating operations carried out during a flight-based acoustic localization of a launch site using a single acoustic array, according to some examples of the presently disclosed subject matter.

As before, the process can be initiated in response to receiving acoustic signals by sensors in the acoustic array 101 (block 401). The acoustic signals received by the array (following preliminary processing) are processed to determine whether a flight event is detected (block 403; e.g., by the event detection module 131). An object-specific flight profile corresponds to the distinctive pattern of sound generated by an airborne object during its flight, as captured by acoustic sensors. This acoustic signature includes various signal parameters such as frequency, intensity, Doppler shift, harmonic content, angular velocity effects, directionality, and temporal characteristics, which together describe the sound emitted by the object as it moves through the air.

Detecting an airborne object based on its object-specific flight profile involves, for example, detecting consistent or repetitive sounds associated with airborne propulsion systems, such as the steady hum of a jet engine or the thump of rotors, and analyzing movement-related changes like the Doppler shift. By examining the signal parameters and comparing their values to known acoustic signatures of airborne objects, it is possible to detect airborne objects (i.e., flight events) and distinguish them from other noise.

Different types of projectiles, such as missiles, rockets, or artillery shells, produce, during flight, unique acoustic signatures due to variations in propulsion systems, aerodynamics, and flight paths. By analyzing these signatures, it is possible to identify the type of airborne object (block 405; e.g., by object type determination module 133).

As explained above, with respect to the launch event, detection and identification of an airborne object can be carried out by querying an acoustic profiling library and/or using a **ML** model trained for this purpose. Signal parameters can be used for querying the library and identifying a matching entry, or as input parameters for the ML model.

In some examples, the object-specific flight profile of an airborne object includes an acoustic pattern constructed by a continuous sequence of sound production generated by the airborne object along it flight path, segmented by key points. Due to the object's substantially constant velocity and the consistent structural properties of its flight, the acoustic signal is characterized by a repeating pattern of key points, with each key point correlating with a particular phase in the object's flight. These points are each defined by distinct signal parameters, such as frequency, intensity, temporal distance, and other relevant signal parameters. By analyzing this repeating pattern of key points, the system can accurately map each key point in the sequence to a specific phase along the flight path, enabling precise monitoring and prediction of the object's advancement along its flight path.

The processing of the signal parameters and identification of key points along the acoustic pattern of the airborne object enables to determine two critical distances: the range from the flying object when at a specific key point in the flight path to the launch site, and the range from the flying object to the sensor array. The first range can be determined in view of the constant velocity and substantially straight flight path of the airborne object, which prescribes a known distance between each identifiable key point and the launch site. The second range is determined by analyzing the decay of the sound as it travels from the airborne object at a specific key point to the sensor array, allowing for distance measurement, as described above with respect to the launch event. Each key point along the flight path of a particular type of airborne object (e.g., a particular type of ATGM missile) is characterized by a respective decay profile that defines the relationship between distance and attenuation of the sound.

According to the presently disclosed subject matter, following identification of the type of an airborne object, acoustic signals received by the acoustic array (101) are processed to determine key points along the flight path, based on the distinctive signal parameters that characterize each key point (block 407). As the object is flying and generates acoustic signals, these signals are processed to identify key points based on their respective signal parameters.

For at least one key point (in some examples two or more key points), the range from each key point to the launch site, and the range from the key point to the observation point (where the acoustic array 101 is located), are determined (block 409). This information can be obtained by querying an acoustic profiling library and/or using a ML model trained for this purpose. The acoustic profiling library can store, in an entry of a corresponding airborne object, information indicating the distance from each key point to the launch site. The acoustic profiling library can further include data that enables calculating the range to the sensor array from each key point. This data can include an acoustic decay profile for each key point, associating between the intensity of a received signal and the range to the respective key point. The distance to the key point can be calculated as explained above with reference to block 307 regarding the launch event.

Considering that most munitions travel in a substantially straight trajectory (even if they are in a parabolic course, such as the case in artillery shells), by tracking multiple points along the trajectory of the airborne object and determining their respective ranges from the launch site, it becomes possible to reconstruct the trajectory of the object starting from the launch site relative to the observation point, where the acoustic array is located (block 411; where operations described with reference to blocks 407 to 411 can be executed by flight event processing module 137). This method enables the mapping of the object's flight path from the launch site to its current position. By analyzing these points, a direction between the observation point and the launch site can be established, providing information on the object's origin (launch site) and flight direction.

As mentioned above with respect to launch event analysis, the direction to the launch site can be also calculated using the acoustic array (101), by employing methods such as Time Difference of Arrival (TDOA) or Direction of Arrival (DOA) using signals received at two or more sensors in the array (block 415; e.g., by direction finder 141).

The direction and range to the launch site can be integrated to calculate a location of the launch site, providing a comprehensive assessment of both the distance and bearing relative to the observation point, all by using a single acoustic array (block 413; e.g., by localization module 143).

In some examples, both launch-based and flight-based acoustic localization are performed, resulting in two localization outputs that, when combined, offer enhanced localization accuracy.

Once the launch site location is determined, the data can be utilized in various ways. For instance, the location information, including the range and direction to the launch site, can be displayed on a user interface (e.g., part of the user interface 109) for the operator's reference. Additionally, this data can be transmitted to other systems. For example, the location data can be sent to another unit to inform them of the threat's position. In another scenario, the location data can be transmitted to a countermeasure system (e.g., artillery or UAV system) to enable the immediate deployment of a countermeasure targeting the launch site, aimed at neutralizing the enemy infrastructure responsible for the launch. Examples of countermeasure systems include artillery, mortars, missiles, or UAVs. For instance, a loitering UAV, such as a Harop or Switchblade, can be deployed to locate and strike the launch site, providing a precise and timely response to the threat.

Even if the calculated location of the launching site has limited accuracy (e.g., accuracy of 5-10 meters or more) it can provide an estimated location which can assist in the detection of the launch site. For example, it can assist in narrowing down a search window of a surveillance system, e.g., an optical payload. This information can be employed, for example, by a surveillance system onboard a loitering UAV, to assist in detection of the launch site by applying additional object detection techniques, such as image processing, for accurately detecting the launch site within the window.

As with the launch-based and flight-based acoustic localization procedures described above, location of an impact point can be calculated using a single acoustic array. To this end, the system leverages the unique acoustic signatures generated during the impact event of a particular airborne object. The location of the impact point can be used together with the launch-based and flight-based acoustic localization outputs to improve accuracy of the launch site localization.

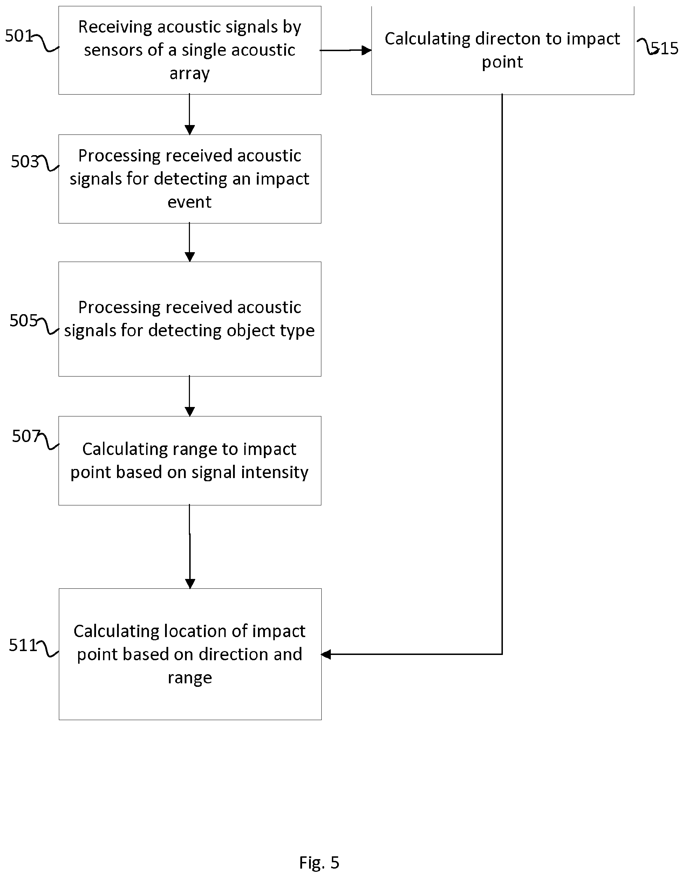

Fig. 5 is a flowchart illustrating operations carried out for localizing an impact point using a single acoustic array, according to some examples of the presently disclosed subject matter.

The system's acoustic array (101) captures the sound waves generated by the impact event of the airborne object (block 501). Following preliminary processing (including amplification, filtering, and digitization) the received acoustic signals are forwarded to the processing circuitry (120) for further analysis.

The received acoustic signals are processed to identify the occurrence of an impact event. This involves analyzing the acoustic data to detect the signal parameters characterizing an impact, which typically includes a sudden, high-intensity sound followed by a rapid decay (block 503; e.g., by event detection module 131).

In some examples, the processing circuitry (120) extracts specific signal parameters from the acoustic signals of the impact event. These parameters include, for example, frequency, intensity, duration, and other relevant characteristics that define a unique acoustic signature of the impact. The system uses the extracted signal parameters to identify the type of airborne object that caused the impact (block 505; e.g., by object type determination module 133). As explained above, this can be done, for example, by querying an acoustic profiling library, or using a machine learning (ML) model trained to recognize the acoustic signatures of impact of different types of objects. Considering the acoustic profiling library, it contains data associating various types of airborne objects with their respective acoustic signal parameters observed during impact events.

Assuming an acoustic profiling library is used, once the type of object is identified, the system retrieves the corresponding acoustic decay profile from the respective object-specific acoustic profile stored in the acoustic profiling library. The system calculates the range to the impact point based on the recorded intensity of the impact sound and the retrieved acoustic decay profile (block 507; e.g., by impact event processing module 139). The decay profile provides a reference for how the sound intensity diminishes over distance. By comparing the recorded intensity with the reference intensity values in the decay profile, the system can estimate the distance to the impact point. An example of the calculation of the range in this manner is provided above with reference to Fig. 3.

As explained above with reference to Figs. 3 and 4, the direction to the impact point is also calculated using the acoustic array (block 515), and the direction and range are integrated to calculate a location of the impact point (block 511; e.g., by localization module 143).

Once the impact point is determined, system 100 integrates this data with the previously obtained launch and flight data (e.g., by localization module 143). This involves combining the range and direction information from the impact event with the range and direction information from the launch and flight events. By using the range and direction data from multiple events (launch and/or flight, and impact), the system can determine the position of the launch site (e.g., by triangulation). This multi-event triangulation provides a more accurate and reliable localization of the launch site, compared to using data from a single event.

The impact point data can also be used to refine the flight path of the airborne object. By accurately determining the end point of the flight path (the impact point), the system can backtrack the trajectory of the object to its origin (the launch site). This refined flight path helps in accurately mapping the object's trajectory and enhances localization of the launch site.

The impact point data serves as an additional verification point for the localization process. By cross-verifying the data from the launch, flight, and impact events, the system can improve the accuracy and consistency of the localization results. Any discrepancies can be identified and corrected, leading to a more precise localization of the launch site.

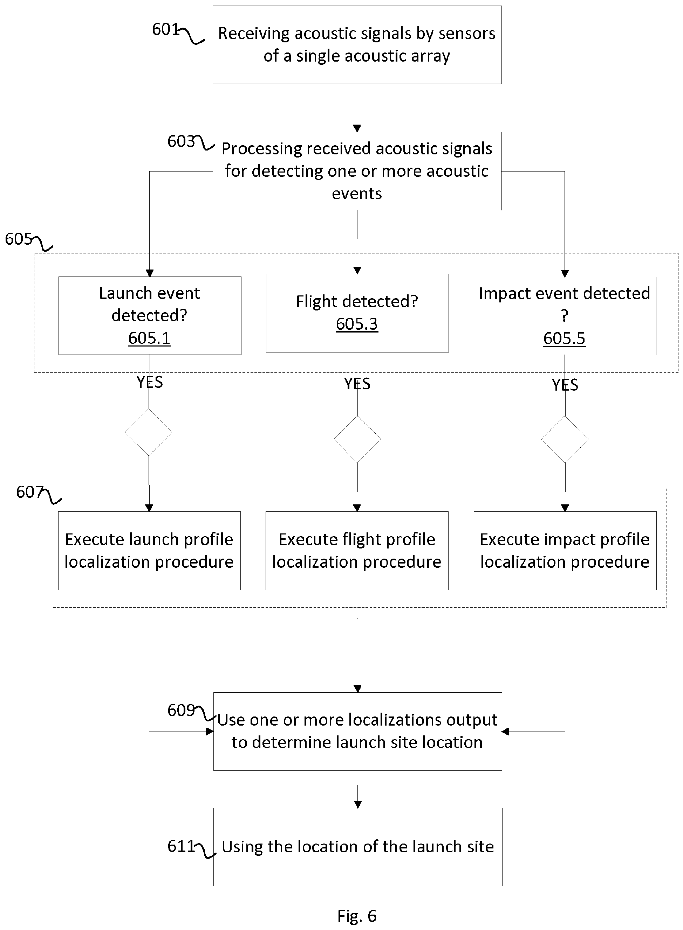

Fig. 6 is a flowchart illustrating, in high level, the process of localizing a launch site using a single acoustic array and acoustic phases data integration, according to some examples of the presently disclosed subject matter. While Figs. 3 to 5 show each localization procedure as a separate procedure, Fig. 6 shows the integration of these procedures in one unified process.

The process begins with receiving acoustic signals by a single acoustic array (101). These signals are captured by the array and forwarded to the processing circuitry for further analysis (block 601). Pre-processing may be applied on the received signals, including amplification, filtering, and digitization. The received acoustic signals are then processed to detect one or more acoustic events. This step involves analyzing the acoustic data to identify specific events, such as launch, flight, or impact.

To this end, the processing described with reference to any one of Figs. 3-5 are executed to determine whether any one of a launch event, flight event, or impact event, are detected (block 603).

If a launch event is detected (605.1), the system executes the launch-based acoustic localization procedure (607.1). This involves using signal parameters of acoustic signals detected during launch to identify the type of airborne object by its respective acoustic signature, and subsequently calculating the range and direction to the launch site.

If a flight event is detected (605.3), the system executes the flight-based acoustic localization procedure (607.3). This involves using signal parameters of acoustic signals detected during flight to identify the type of airborne object by its respective acoustic signature, and subsequently calculating the range and direction to the launch site.

If an impact event is detected (605.5), the system executes the impact-based acoustic localization procedure (607.5). This involves using signal parameters of acoustic signals detected during impact to identify the type of airborne object by its respective acoustic signature, and subsequently calculating the range and direction to the launch site.

As explained above, for any type of acoustic event, the range to the launch site is determined using data that enables the association between the acoustic signal parameters and the range, for example by leveraging data stored in an acoustic profiling library or a machine learning model.

Notably, in some examples, determination of the type of airborne objects precedes determination of the type of event.

If more than one localization procedure is executed, the outputs from two or more of these localization procedures are then used to determine the launch site location. As explained above, by integrating the data from multiple acoustic phases, the system can provide a more accurate and reliable localization of the launch site (e.g., by data fusion module 145). Fusion between multiple localization outputs can be done in various ways, e.g., by applying a weighted average, where higher weights are assigned to localization output that exhibits higher accuracy over time.

As further explained above, the data indicative of the location of the launch site can be used in various manners. For example, it can be transmitted and used by another system for reconnaissance purposes and/or by a countermeasure system for rapid activation of a countermeasure targeting the launch site.

In complex scenarios, the challenge lies in accurately distinguishing and associating multiple overlapping signals that originate from different sources. These scenarios often involve various acoustic events occurring simultaneously or in close succession, making it difficult to separate and correctly identify each signal. Environmental factors, such as noise and signal reflections, further complicate the process, increasing the risk of incorrect association. This complexity requires methods and technologies to ensure that each signal is accurately linked to its corresponding event, maintaining the reliability of the system's overall performance. For example, following the identification of a launch event for an object of a certain type, the system detects a flight event of the same type of object. The system must determine whether the launch event and the flight event are related to the same object, or, whether, despite being of the same type, the flight event is caused by a different object of the same type. This distinction ensures accurate tracking and avoids misclassification of different objects sharing similar characteristics.

One or more of the following methods can be employed to address this challenge:
Projectile Type Association: the system (100; e.g., by data correlation module 147) utilizes the identified type of airborne objects, such as missiles, rockets, and artillery shells, to associate between recorded signals and their corresponding acoustic events.
Temporal Association: the system (100) uses the timing of recorded signals to correlate them with the relevant acoustic events. By analyzing when each signal was received, the system ensures that events are temporally aligned, linking the correct signal to its corresponding acoustic event.
Spatial Association: the system (100) makes use of spatial information to ensure that signals are associated with events in a geographically consistent manner. For instance, a signal detected from a specific direction will be matched with events expected from that direction, ensuring spatial coherence.
Cross-Correlation: the system (100) applies cross-correlation techniques to analyze time delays between signals received at different sensors. This method helps determine which signals originate from the same source, allowing for accurate association with the corresponding acoustic events.
Machine Learning: the system (100) utilizes machine learning models to recognize and differentiate between the acoustic signatures of various airborne objects. These models can identify patterns in the data, enabling the system to accurately associate signals with specific events, even in complex scenarios involving multiple sources.
Doppler Shift Analysis: the system (100) analyzes Doppler shifts in the received signals to determine the relative motion of objects. By examining frequency changes due to the Doppler effect, the system can differentiate between objects moving in different directions and at different speeds, aiding in the accurate association of signals with their corresponding events.

In complex scenarios involving multiple launches and impacts, impact point data helps in associating the correct flight path with the corresponding launch event. This association is based on various parameters, including projectile type, temporal association, and spatial association. By accurately matching the impact point with the corresponding launch event, the system can enhance localization of the launch site in complex scenarios.

By employing these methods, the system can effectively handle complex scenarios involving multiple launches and flights, ensuring accurate localization and association of events. This approach minimizes confusion and enhances the reliability of the localization process.

The processes described in any one of Figs. 3-6 can incorporate a data correlation procedure, executed each time acoustic signals are received by the system, for example, following determination of the type of object. In this procedure, signal correlation methods (e.g., those described above) are implemented to determine whether the received signals are related to previously received acoustic signals caused by the launch, flight, or impact of a previously detected object. If it is determined that the received signals are related to a previously detected object, the system updates the tracking and localization data of the object accordingly. Otherwise, the system may classify the received signals as originating from a new object and initiate a new tracking and localization process for that object.

The data correlation procedure can be incorporated dynamically throughout the localization process to adapt to the specific nature of the acoustic signals received (launch, flight, or impact). At each stage of the localization process, specific correlation tasks can be executed to ensure accurate tracking and identification of objects. For example, it can be executed following the determination of an object type that indicates the same type of object is detected at different times or during different events.

In the case of launch events, which are instantaneous in nature, it is unlikely that different acoustic signals received at different times are related to the same launch event. If a new launch event is detected for the same object type, it is generally classified as a new object, given the instantaneous nature of launches. As mentioned above, timing and spatial data can be used to confirm whether the detected launch is a separate event. The system will generally classify different acoustic signals related to a launch as distinct launch events, unless, for example, there is an error in detection or signal overlap. The system then tracks the newly detected launch separately from any previous launches.

Unlike the launch phase, flight events are progressive and require continuous data correlation. The system evaluates whether incoming acoustic signals associated with flight events pertain to the same object. As new flight-related acoustic signals are progressively received, the system uses parameters such as object type, timing, distance, and trajectory data to determine whether flight data associated with the same type of object is related to the same object or to a distinct object of the same type. The system also uses this data to correlate different launch events with their respective flight and impact events.

While certain examples of the present disclosure refer to a processing circuitry being configured to perform the above recited operations, the functionalities/operations of the aforementioned functional modules can be performed by the one or more processors in the processing circuitry in various ways. By way of example, the operations of each module can be performed by a specific processor, or by a combination of processors. The operations of the various functional modules, such as processing the examination/inspection image, and performing defect examination, etc., can thus be performed by respective processors (or processor combinations), while, optionally, these operations may be performed by the same processor. The present disclosure should not be limited to being construed as one single processor always performing all the operations.

Those versed in the art will readily appreciate that the teachings of the presently disclosed subject matter are not bound by the system illustrated in Figs. 1 and 2. Different system components and modules in Figs. 1 and 2 can be made up of any combination of software, hardware, and/or firmware, as relevant, executed on a suitable device or devices, which perform the functions as defined and explained herein. Equivalent and/or modified functionality, as described with respect to each system component and module, can be consolidated or divided in another manner. Thus, in some examples of the presently disclosed subject matter, the system may include fewer, more, modified and/or different components, modules, and functions than those shown in Figs. 1 and 2.

Each component in Figs. 1 and 2 may represent a plurality of the particular components, which are adapted to independently and/or cooperatively operate to process various data and electrical inputs, and for enabling operations related to a computerized examination system. In some cases, multiple instances of a component may be utilized for reasons of performance, redundancy, and/or availability. Similarly, in some cases, multiple instances of a component may be utilized for reasons of functionality or application. For example, different portions of the particular functionality may be placed in different instances of the component. Furthermore, any reference made in the specification to a single processing circuitry should be interpreted to optionally include multiple processing circuitries.

Unless specifically stated otherwise, as apparent from the above discussions, it is appreciated that, throughout the specification, discussions utilizing terms such as "detecting", "identifying", "calculating", "utilizing", or the like, include an action and/or processes of a computer that manipulate and/or transform data into other data, said data represented as physical quantities, e.g. such as electronic quantities, and/or said data representing the physical objects.

The terms "system", "computer system", "computerized system" or the like, used herein, should be expansively construed to include any kind of hardware-based electronic device with one or more data processing circuitries. Each processing circuitry can comprise, for example, one or more processors operatively connected to computer memory, capable of executing stored instructions to perform the operations described herein. Any reference made in the description or claims to a processing circuitry should be construed to include also multiple processing circuitries.

The one or more processors referred to herein can represent one or more general-purpose processing devices, such as a microprocessor, a central processing unit, or the like. More particularly, a given processor may be one of a complex instruction set computing (CISC) microprocessor, a reduced instruction set computing (RISC) microprocessor, a very long instruction word (VLIW) microprocessor, a processor implementing other instruction sets, or a processor implementing a combination of instruction sets. The one or more processors may also be one or more special-purpose processing devices such as an application specific integrated circuit (ASIC), a field programmable gate array (FPGA), a digital signal processor (DSP), a graphics processing unit (GPU), a network processor, or the like.

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately, or in any suitable sub-combination.

In embodiments of the presently disclosed subject matter, fewer, more and/or different stages than those shown in Figs. 3 to 6 can be executed. In embodiments of the presently disclosed subject matter, one or more stages, illustrated in the figures, may be executed in a different order, and/or one or more groups of stages may be executed simultaneously.

It will also be understood that the system according to the presently disclosed subject matter may be a suitably programmed computer. Likewise, the presently disclosed subject matter contemplates a computer program being readable by a computer for executing the method of the presently disclosed subject matter. The presently disclosed subject matter further contemplates a machine-readable (e.g., non-transitory) memory tangibly embodying a program of instructions executable by the machine for executing the method of the presently disclosed subject matter.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

## Claims

1. A computer-implemented method of localizing a launch site of an airborne object using a single acoustic array of one or more acoustic sensors; the method comprising:
receiving acoustic signals by the acoustic array;
processing the acoustic signals comprising:
determining, based on signal parameters of the acoustic signals, one or more acoustic events, including at least one of: launch event of an airborne object occurring at a launch site and flight event of the airborne object; and identifying an object type of the airborne object;
for each acoustic event that is detected:
calculating a respective range between the acoustic array and the launch site, based on an object-specific acoustic profile of the corresponding type of airborne object;
calculating a respective direction from the acoustic array and the launch site;
calculating a location of the launch site based on one or more respective ranges and a direction to the launch site calculated by the acoustic array.

2. The computer-implemented method of claim 1, wherein the one or more acoustic events that are detected include a launch event, wherein the object-specific acoustic profile includes an acoustic decay profile that is indicative of a relationship between the intensity of the acoustic signals and a range between the acoustic sensors and a source location of the acoustic signals.

3. The computer-implemented method of any one of the preceding claims, wherein the one or more acoustic events that are detected include a flight event of the airborne object, wherein the object-specific acoustic profile comprises: data indicative of multiple key points distributed along a flight path of the airborne object, each key point being **characterized by**:
a respective range between the key point to the launch site, respective set of signal parameters, and respective acoustic decay profile, which indicates a relationship between the intensity of the acoustic signals generated by the airborne object at the key point and a range between the acoustic sensors and the location of the key point;
the method comprising: utilizing the object-specific acoustic profile for reconstructing a flight path of the airborne object to the launch site, and calculating the respective range to the launch site.

4. The computer-implemented method of any one of the preceding claims, wherein the acoustic events include an impact event of the airborne object;
the method comprising:
calculating a range to the impact location based on the object-specific acoustic profile, wherein the object-specific acoustic profile includes an acoustic decay profile that is indicative of a relationship between the intensity of the acoustic signals and a range between the acoustic sensors and a source location of the acoustic signals;
calculating a respective direction from the acoustic array and the impact point;
calculating a location of the impact point based on the respective range and the respective direction.

5. The computer-implemented method of any one of the preceding claims, wherein the one or more acoustic events include a launch event and a flight event, the method comprising: calculating a first range for the launch event and a second range for the flight event, and calculating the position based on an integration of the first range and second range.

6. The computer-implemented method of any one of the preceding claims, comprising: querying an acoustic profiling library using the signal parameters, and retrieving, from the acoustic profiling library, one or more of: data indicative of a type of the acoustic event, and data indicative of a type of airborne object.

7. The computer-implemented method of any one of the preceding claims, wherein detecting one or more acoustic events comprises utilizing a machine learning model trained to receive the signal parameter, and providing, as output, information indicative of a matching type of acoustic event.

8. The computer-implemented method of any one of the preceding claims, wherein identifying, based on signal parameters of the acoustic signals, a corresponding type of airborne object, comprises utilizing a machine learning model trained to receive the signal parameter, and providing, as output, information indicative of a matching type of airborne object.

9. The computer-implemented method of any one of the preceding claims, wherein calculating a respective range between the acoustic array and the airborne object comprises utilizing a machine learning model trained to receive the signal parameters, and provide, as output, the respective range.

10. The computer-implemented method of any one of the preceding claims comprising providing data indicative of the location of the launch site to a countermeasure system, to enable activation of a countermeasure targeting the launch site.

11. The computer-implemented method of any one of the preceding claims comprising providing data indicative of the location of the launch site to a surveillance system to assist in detection of the launch site by the surveillance system.

12. A system for localizing a launch site of an airborne object, the system comprising a single acoustic array of one or more acoustic sensors operatively connected to a processing circuitry;
the acoustic array is configured to receive acoustic signals;
the processing circuitry is configured to execute operations in accordance with any one of claims 1 to 11.

13. The system of claim 12 being operatively connected to a countermeasure system configured, responsive to receiving the location of the launch site, to activate a countermeasure targeting the launch site.

14. The system of claim 12 being operatively connected to a surveillance system configured to utilize the location of the launch site to search and monitor the launch site.

15. A computer-readable storage medium comprising instructions which when executed by a computer, cause the computer to carry out operations of any one of claims 1 to 11.
